# EUROPÄISCHE PATENTANMELDUNG

(11) **EP 2 062 711 A1**
(43) Veröffentlichungstag der Anmeldung: **27.05.2009**
(21) Anmeldenummer: 08169699.9
(22) Anmeldetag: 21.11.2008
(51) Int. Cl.: B29B 11/14, B29B 11/08, B29C 49/06, B29C 49/12

(54) **Preform für Kunststoffflaschen oder Weithalsgefässe**

(30) Priorität: 22.11.2007 CH 18052007
(71) Anmelder: Alpla-Werke Alwin Lehner GmbH und Co.KG, 6971 Hard (AT)
(72) Erfinder: Dornbach, Christian, 6972 Fussach (AT)
(74) Vertreter: Hasler, Erich

(57) **Zusammenfassung**

Es ist ein Preform zur Herstellung von Kunststoffflaschen oder Weithalsgefässen beschrieben, der einen starren, im wesentlichen länglichen, kegelstumpfartigen Körperabschnitt (2) aufweist, der an seinem einen Längsende durch einen kuppenartigen Endabschnitt (3) verschlossen ist und an seinem gegenüberliegenden Längsende über einen Preformanlauf (8) an einen mit einer Ausgiessöffnung (5) versehenen Halsabschnitt (4) angrenzt. Der Preform (1) besitzt im Körperabschnitt (2) einen Aussendurchmesser (a), der sich vom Preformanlauf (8) zum Endabschnitt (3) verringert. Der Körperabschnitt (2) weist eine Wandstärke (w) auf, die sich über seine Längserstreckung im Wesentlichen stetig um bis zu ± 2 mm verändert. Dazu besitzt er einen Innendurchmesser (i), der von einem Übergang zum Preformanlauf (8) bis zu einem Übergang zum kuppenartigen Endabschnitt (3) im Wesentlichen stetig abnimmt.

## Beschreibung

Die Erfindung betrifft einen Preform für Kunststoffflaschen oder Weithalsgefässe gemäss dem Oberbegriff des Patentanspruchs 1.

Die in der Vergangenheit üblichen Behältnisse aus Weiss- oder Buntblech, aus Glas oder auch aus Keramik werden in zunehmendem Masse von Behältnissen aus Kunststoff abgelöst. Insbesondere für die Verpackung von schüttfähigen Medien, beispielsweise von Reinigungsutensilien, Körperpflegemitteln, Kosmetika, Kfz-Medien, usw., kommen hauptsächlich Kunststoffbehältnisse zum Einsatz. Das geringe Gewicht und die geringeren Kosten spielen sicher eine nicht unerhebliche Rolle bei dieser Substitution. Die Verwendung rezyklierbarer Kunststoffmaterialien und die insgesamt günstigere Gesamtenergiebilanz bei ihrer Herstellung tragen auch dazu bei, die Akzeptanz von Kunststoffbehältnissen, insbesondere von Kunststoffflaschen, beim Konsumenten zu fördern.

Die am häufigsten eingesetzten Kunststoffflaschen werden meist in einem sogenannten Spritzstreckblasverfahren hergestellt. Bei diesen Verfahren handelt es sich um eine Kombination aus Spritzgiessen und Blasformen. Dabei wird zunächst in einem Spritzgiessprozess in einer Spritzform ein Preform hergestellt. Neuerdings sind auch Fliesspressverfahren zur Herstellung von Preforms vorgeschlagen worden. Der Preform weist einen im Wesentlichen länglichen Körper auf, dessen eines Längsende durch einen kuppenartigen Endabschnitt abgeschlossen ist. Am anderen Längsende des Körpers schliesst ein Halsabschnitt mit einer Ausgiessöffnung an. Dieser Halsabschnitt weist üblicherweise bereits die spätere Form des Flaschenhalses auf. An der Aussenseite dieses Halsabschnitts sind auch meist bereits Gewindeabschnitte oder dergleichen für die Festlegung eines Verschlussteils ausgebildet. Der Preform wird nach seiner Herstellung in einem Kunststoffspritzverfahren aus der Spritzform entformt, bei Bedarf konditioniert und in eine Blasform einer Blasmaschine eingebracht, in welcher er schliesslich mit Überdruck auf die gewünschte Form aufgeblasen und zusätzlich mit einem Reckdorn verstreckt wird. Es ist auch bereits ein Spritzblasverfahren bekannt, bei dem der Blasprozess direkt anschliessend an das Spritzen des Preforms erfolgt. Der Preform verbleibt dabei auf dem Spritzdorn, und ein Teil der Spritzform bildet einen Abschnitt der Blasform.

Für die Herstellung von Kunststoffflaschen oder Weithalsgefässen mit einem verstärkten Bodenbereich sind spezielle Preforms bekannt, die einen abgesetzten bzw. abgestuften Bodenabschnitt aufweisen. Bei diesen Preforms verändert sich die Wandstärke des Preforms am Übergang zum kuppelartigen Bodenabschnitt stufenartig und nimmt abrupt einen grösseren Wert an. Bei der Herstellung derartiger Preforms im Spritzgiessverfahren kann die abrupte Wandstärkenänderung zu Problemen führen. Insbesondere kann es am Übergang von der Wandstärke des Körpers zur grösseren Wandstärke des Bodenabschnitts zu beim Spritzgiessverfahren zu lokalen Temperaturspitzen kommen, durch welche die Eigenschaften des Kunststoffs beeinträchtigt werden. Auch beim Streckblasverfahren können stufenartig abgesetzten Wandstärkenänderungen des Preforms zu Problemen führen, die sich als Unregelmässigkeiten an der fertig streckgeblasenen Kunststoffflasche äussern. Oft besteht auch der Wunsch, den Preform am besonders kritischen Übergangsbereich vom Halsabschnitt zum Körper, im sogenannten Preformanlauf, mit einer grösseren Wandstärke auszubilden. Auch dies führt bei den bekannten Preforms zu gestuften Wandstärkenänderungen, welche zu den oben geschilderten Problemen führen können.

Die US 4,044,086 offenbart einen Preform, dessen Wandstärke über seine Längserstreckung im Wesentlichen stetig abnimmt, und dessen Innendurchmesser i von einem Übergang zum Preformanlauf bis zu einem Übergang zum kuppenartigen Endabschnitt im Wesentlichen ebenfalls stetig abnimmt. In der Längserstreckung nimmt die Wandstärke von oben nach unten von 0.047 inch (1.2 mm) auf 0.18 inch (4.7 mm) zu. Damit beträgt die Wanddickenveränderung entlang der Längserstreckung des Preforms mehr als 2 mm.

Die EP 0 311161 offenbart ein Verfahren und eine Vorrichtung zur Herstellung von mehrschichtigen, thermoplastischen Preforms, aus welchen blasgeformte Behälter für Lebensmittel und Getränke herstellbar sind. In den Figuren ist ein Formwerk zur Herstellung eines kegelstumpfartigen Preforms gezeigt. Mit dem Formwerk lassen sich Preforms herstellen, welche anschliessend an den Halsabschnitt einen zylindrischen Abschnitt aufweisen, welcher über einen konischen Abschnitt von im Wesentlichen gleicher Wandstärke in den Körperabschnitt übergeht. Der Aussendurchmesser des Preformanlaufs nimmt vom Halsabschnitt bis zum Körperabschnitt ab.

Aufgabe der vorliegenden Erfindung ist es daher, einen Preform für die Herstellung von Kunststoffflaschen oder Weithalsgefässen in einem Spritzblas- oder Spritzstreckblasverfahren zu schaffen, welcher weder bei seiner Herstellung in einem Kunststoffspritzverfahren noch im anschliessenden Blasverfahren zu Problemen führt. Dabei müssen die geforderten mechanischen Festigkeiten und die thermische Stabilität der aus dem Preform gefertigten Kunststoffflasche bzw. des Weithalsgefässes gewährleistet bleiben.

Die Lösung dieser Aufgaben besteht in einem Preform zur Herstellung von Kunststoffflaschen oder Weithalsgefässen, welcher die im kennzeichnenden Abschnitt des Patentanspruchs 1 aufgelisteten Merkmale aufweist. Weiterbildungen und/oder vorteilhafte Ausführungsvarianten der Erfindung sind Gegenstand der abhängigen Patentansprüche.

Durch die Erfindung wird ein Preform zur Herstellung von Kunststoffflaschen oder Weithalsgefässen geschaffen, der einen starren, im wesentlichen länglichen, kegelstumpfartigen Körperabschnitt aufweist, der an seinem einen Längsende durch einen kuppenartigen Endabschnitt verschlossen ist und an seinem gegenüberliegenden Längsende über einen Preformanlauf an einen mit einer Ausgiessöffnung versehenen Halsabschnitt angrenzt. Der Preform besitzt im Körperabschnitt einen Aussendurchmesser, der sich vom Preformanlauf zum Endabschnitt verringert. Der Körperabschnitt weist eine Wandstärke auf, die sich über seine Längserstreckung im Wesentlichen stetig um bis zu ± 2 mm verändert. Dazu besitzt er einen Innendurchmesser, der von einem Übergang zum Preformanlauf bis zu einem Übergang zum kuppenartigen Endabschnitt im Wesentlichen stetig abnimmt.

Indem abrupte Wandstärkenänderungen vermieden werden, wird dem Problem von lokalen thermischen Belastungen beim Kunststoffspritzen des Preforms Rechnung getragen. Auch ist dadurch sichergestellt, dass der Preform über seinen Umfang gleichmässige Wandstärken aufweist. Lunker oder dergleichen infolge von Turbulenzen des Kunststoffmaterials an Kanten und Ecken können so zuverlässig vermieden werden. Beim Streckblasen des Preforms werden die Kräfte gleichmässiger verteilt. Lokale Überbeanspruchungen, die zu Materialschwächungen führen könnten, oder Überhitzungen an Kanten und Ecken werden dadurch vermieden. Infolge der im Wesentlichen stetig verlaufenden Wandstärkenänderungen von nur bis zu 2 mm im Körperabschnitt des Preforms (entweder Wanddickenzunahme oder Wanddickenabnahme um max. 2 mm vom Übergang des Preformanlaufs bis zum Übergang zum kuppenartigen Endabschnitt) ist das Verhalten des Kunststoffs beim Streckblasen besser vorhersehbar und kontrollierbar. Dadurch können Kunststoffflaschen oder Weithalsgefässe mit den gewünschten Eigenschaften zuverlässiger hergestellt werden. Unabhängig von der Wandstärkenänderung des Körperabschnitts nimmt der Innendurchmesser des Körperabschnitts über seine Längserstreckung zum kuppenartigen Endabschnitt hin im Wesentlichen stetig ab. Hinterschneidungen werden vermieden, damit die einfache Entformbarkeit des Spritzkerns gewährleistet bleibt.

Eine Variante des Preforms sieht vor, dass der den Übergang vom Halsabschnitt zum Körperabschnitt bildende Preformanlauf einen Aussendurchmesser aufweist, der sich vom Halsabschnitt zum Körperabschnitt verändert. Der Preformanlauf bildet nach dem Blasverfahren den Schulterbereich der hergestellten Kunststoffflasche bzw. des Weithalsgefässes. Durch die erfindungsgemässe Ausbildung wird bereits am Preform die spätere Form des erzeugten Behältnisses berücksichtigt. Dadurch wird der Preformanlauf beim Blasverfahren nicht übermässig aber auch nicht zu wenig gereckt und der spätere Schulterbereich des Behältnisses erhält seine optimale Festigkeit. Dabei kann es vorgesehen sein, dass der Aussendurchmesser des Preformanlaufs sich vom Halsabschnitt zum Körperabschnitt wenigstens in dem an den Körperabschnitt angrenzenden Teilabschnitt vergrössert. Dies ist besonders Kunststoffbehältern mit grossvolumigen Körpern von Vorteil. Eine andere Variante des Preforms sieht hingegen vor, dass der Aussendurchmesser des Preformanlaufs sich vom Halsabschnitt zum Körperabschnitt wenigstens in dem an den Körperabschnitt angrenzenden Teilabschnitt verkleinert. Diese Ausführungsvariante des Preforms kommt insbesondere mit Vorteil bei der Herstellung von Weithalsgefässen zum Einsatz. Es versteht sich, dass die Aussendurchmesservergrösserung oder Verkleinerung nicht unmittelbar nach dem Transportring erfolgen kann. Es kann auch zunächst ein im Wesentlichen zylindrischer Abschnitt vorgesehen sein, an den der sich im Aussendurchmesser verändernde Bereich anschliesst. Der Innendurchmesser des Preformanlaufs nimmt hingegen vom Halsabschnitt zum Körperabschnitt des Preforms im Wesentlichen stetig ab.

Zur Verhinderung von abrupten Übergängen vom Preformanlauf zum Körperabschnitt schliessen die Aussenwandung bzw. die Innenwandung des Preformanlaufs mit der angrenzenden Aussenwandung bzw. Innenwandung des Körperabschnitts jeweils stumpfe Winkel ein. Die Winkel betragen 130° bis kleiner 180°, vorzugsweise zwischen 158° und 178° und ganz besonders bevorzugt zwischen 160° und 175°.

Indem der Körperabschnitt des Preforms eine Mindestwandstärke aufweist, die 0.8 mm nicht unterschreitet, ist eine ausreichende Steifigkeit und Stabilität des aus dem Preform hergestellten Kunststoffbehälters sichergestellt. Andererseits überschreitet die Maximalwandstärke des Körperabschnitts 6 mm nicht. Dadurch sind eine ausreichend schnelle Erweichung des gesamten Preforms und eine gleichmässige Reckung des Körperabschnitts beim Blasverfahren gewährleistet.

Für die Gleichmässigkeit des Herstellprozesses des Preforms durch Spritzgiessen, Fliesspressen, aber auch durch Spritzschäumen erweist es sich als zweckmässig, wenn der Körperabschnitt einen Innen- und einen Aussendurchmesser aufweist, die sich jeweils vom Preformanlauf zum kuppenartigen Endabschnitt um 0.1 mm bis maximal 3.5 mm verringern.

Am Übergang vom Körperabschnitt zum Endabschnitt wird ebenfalls eine sprunghafte Wandstärkenänderung vermieden. Dazu weist der kuppenartige Endabschnitt eine Wandstärke auf, die sich von der Wandstärke des Körperabschnitts bis zu einem Anspritzpunkt um 0% bis 50%, vorzugsweise 20 bis 50%, verringert. Die Wandstärke im Anspritzpunkt bleibt dabei unberücksichtigt. Die Wandstärke im Endabschnitt wird dabei je nach der Art des herzustellenden Bodens gewählt, um dem fertig geblasenen Behältnis eine optimale Steifigkeit und Standfestigkeit zu verleihen.

Der erfindungsgemässe Preform kann aus den üblichen für das Streckblasverfahren eingesetzten Materialien, beispielsweise aus PET, bestehen. Mit Vorteil besteht der Körperabschnitt des Preforms wenigstens zu 85% aus Materialien, die aus der Gruppe bestehend aus Polyestern (einschliesslich PET, PBT, PLA, und PEN), Copolyestern, Polyolefinen (insbesondere PP, HDPE) und Polystyrolen (GPS oder HIPS) gewählt sind.

Der erfindungsgemässe Preform ist u.a. für die Herstellung durch Spritzgiessen, Fliesspressen oder Spritzschäumen optimiert.

Kunststoffflaschen und Weithalsgefässe, die aus den erfindungsgemäss ausgebildeten Preforms hergestellt sind, zeichnen sich durch hohe mechanische Festigkeiten und grosse thermische Stabilität aus. Beispielsweise erlauben sie die Ausbildung eines Champagnerbodens für die Lagerung vom stark kohlensäurehältige Getränke, die bei der Lagerung oder beim Transport einen hohen Flascheninnendruck aufbauen können.

Weitere Vorteile und Merkmale ergeben sich aus der nachfolgenden Beschreibung von Ausführungsbeispielen der Erfindung unter Bezugnahme auf die schematischen Zeichnungen. Es zeig in nicht massstabsgetreuer, schematischer Darstellung:
- Fig. 1: einen Axialschnitt eines ersten Ausführungsbeispiels eins Preforms gemäss der Erfindung;
- Fig. 2: einen Axialschnitt eines zweiten Ausführungsbeispiels des Preforms;
- Fig. 3: ein drittes Ausführungsbeispiels des Preforms im Axialschnitt; und
- Fig. 4: eine vierte Variante des Preforms gemäss der Erfindung.

Aus Gründen der besseren Verständlichkeit tragen in den Darstellungen gleiche Teile immer die gleichen Bezugszeichen.

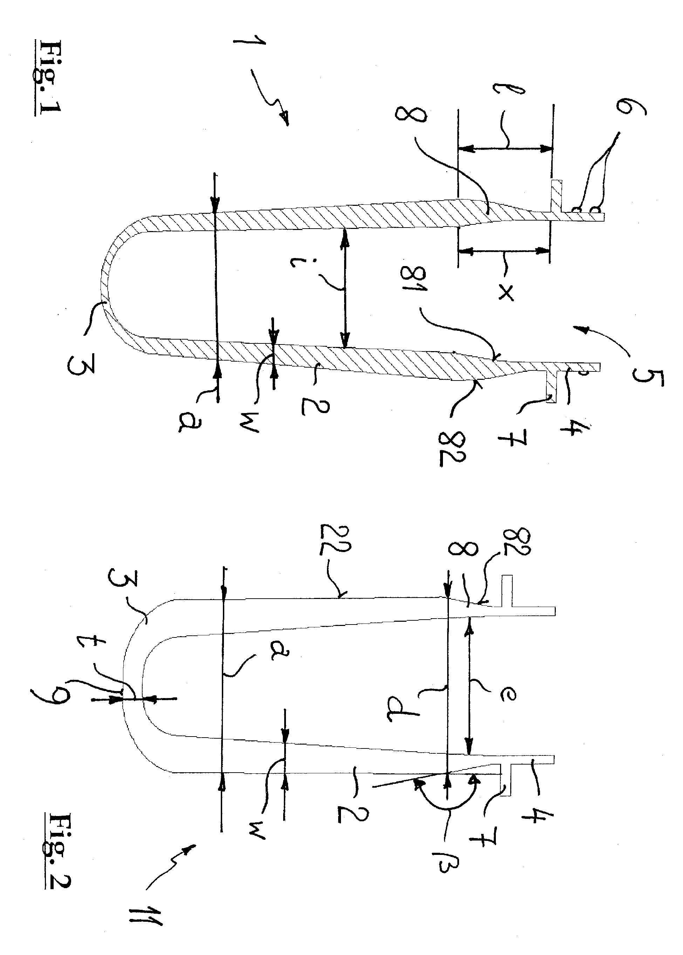

Der in Fig. 1 dargestellte Preform ist gesamthaft mit dem Bezugszeichen 1 versehen. Er weist einen starren, im Wesentlichen länglichen, kegelstumpfartig ausgebildeten Körperabschnitt 2 auf, dessen eine Längsende durch einen kuppenartigen Endabschnitt 3 verschlossen ist. Am anderen Längsende des Körpers 2 schliesst zunächst ein sogenannter Preformanlauf 8 an, der den Übergang des Körperabschnitts 2 zu einem Halsabschnitt 4 mit einer Ausgiessöffnung 5 bildet. Der Halsabschnitt 4 weist üblicherweise bereits die spätere Form des Halses der aufgeblasenen Kunststoffflasche bzw. eines Weithalsgefässes auf. An der Aussenseite des Halsabschnitts 4 sind Gewindeabschnitte 6 oder dergleichen für die Festlegung eines Verschlussteils ausgebildet. Der Preform 1 ist beispielsweise in einem Spritzgiessverfahren hergestellt. Alternative Herstellverfahren sind beispielsweise Fliesspressen oder, mit entsprechenden Grundmaterialien, Spritzschäumen.

Der Preformanlauf 8 ist durch einen ringförmig umlaufenden Transportring 7 vom Halsabschnitt 4 getrennt. Der Preformanlauf 8 weist eine an seiner Innenwandung 81 gemessene axiale Länge x auf, die bei dem dargestellten Ausführungsbeispiel etwa einer axialen Länge 1 des Preformanlaufs 8 an seiner Aussenwandung 82 entspricht. Die beiden axialen Erstreckungen der Innen- bzw. der Aussenwandungen 81, 82 des Preformanlaufs 8 müssen jedoch nicht zwingend die gleiche Länge aufweisen.

Der Körperabschnitt 2 des Preforms 1 weist einen Aussendurchmesser a auf, der sich vom Preformanlauf 8 bis zum kuppenartigen Endabschnitt 3 im Wesentlichen stetig verkleinert. Auch der Innendurchmesser i des Körperabschnitts 1 verkleinert sich im Wesentlichen stetig vom Preformanlauf 8 zum Endabschnitt 3. Der Körperabschnitt 2 besitzt eine Wandstärke w, sie sich entlang der Längserstreckung des Körperabschnitts 2 vom Preformanlauf 8 zum kuppenartigen Endabschnitt 3 im Wesentlichen stetig verändert. Bei dem dargestellten Ausführungsbeispiel verringert sich die Wandstärke w des Körperabschnitts 2 stetig um bis zu ± 2 mm zum Endabschnitt 3 hin. Dabei unterschreitet die Wandstärke w des Körperabschnitts 2 Preforms 1 eine Mindestwandstärke von 0.8 mm nicht.

Ein zweites Ausführungsbeispiel des Preforms ist in Fig. 2 gesamthaft mit dem Bezugszeichen 11 versehen. Er weist wiederum einen Körperabschnitt 2 auf, der einerseits an einen kuppenartigen Endabschnitt 3 grenzt und andererseits über einen Preformanlauf 8 mit einem Halsabschnitt 4 verbunden ist. Der Halsabschnitt 4 und der Preformanlauf 8 werden durch einen Transportring 7 voneinander getrennt. Am Halsabschnitt 4 sind wiederum nicht näher dargestellte Gewindeabschnitte oder dergleichen zur Festlegung eines Verschlussteils ausgebildet. Fig. 2 zeigt, dass der Preform 11 in seinem Preformanlauf 8 einen Aussendurchmesser d aufweist, der sich über einen wesentlichen Abschnitt seiner Längserstreckung vom Transportring 7 zum Körperabschnitt 2 hin im Wesentlichen stetig vergrössert. Der Preformanlauf 8 weist einen Innendurchmesser e auf, der sich zum Körperabschnitt 2 hin verkleinert. Der Übergang einer Aussenwandung 82 des Preformanlaufs 8 zur Aussenwandung 22 des Körperabschnitts 2 erfolgt in einem stumpfen Winkel β. Der stumpfe Übergangswinkel β ist vorzugsweise grösser oder gleich 130° bis kleiner als 180°

Der Preform 11 ist beim Spritzgiessen trotz des durch die Aussendurchmesservergrösserung gebildeten Hinterschnitts einfach entformbar, weil der Preformanlauf 8 in den Backen des Spritzwerkzeugs ausgebildet wird, die radial geöffnet und zugestellt werden. Wegen des abnehmenden Innendurchmessers des Preformanlaufs 8 und des Körperabschnitts 2 ist der Spritzkern einfach axial entformbar. Schliesslich ist der Körperabschnitt 2 mit dem Endabschnitt 3 des Preforms 11 wegen des zum Endabschnitt 3 hin abnehmenden Aussendurchmessers ebenfalls einfach axial entformbar.

Wie aus Fig. 2 ersichtlich ist, nimmt trotz des entlang seiner Längserstreckung abnehmenden Aussendurchmessers a die Wandstärke w des Körperabschnitts 2 stetig zu. Dabei überschreitet die Wandstärke w des Körperabschnitts 2 eine Maximalwandstärke von 6 mm nicht.

Am Übergang vom Körperabschnitt 2 zum kuppenartigen Endabschnitt 3 wird eine sprunghafte Wandstärkenänderung vermieden. Dazu weist der kuppenartige Endabschnitt eine Wandstärke t auf, die sich von der maximalen Wandstärke w des Körperabschnitts 2 bis zu einem Anspritzpunkt 9 um 0% bis 50% verringert. Die Wandstärke im Anspritzpunkt 9 bleibt dabei unberücksichtigt. Die Wandstärke t im Endabschnitt 3 wird dabei je nach der Art des herzustellenden Bodens gewählt, um dem fertig geblasenen Behältnis eine optimale Steifigkeit und Standfestigkeit zu verleihen.

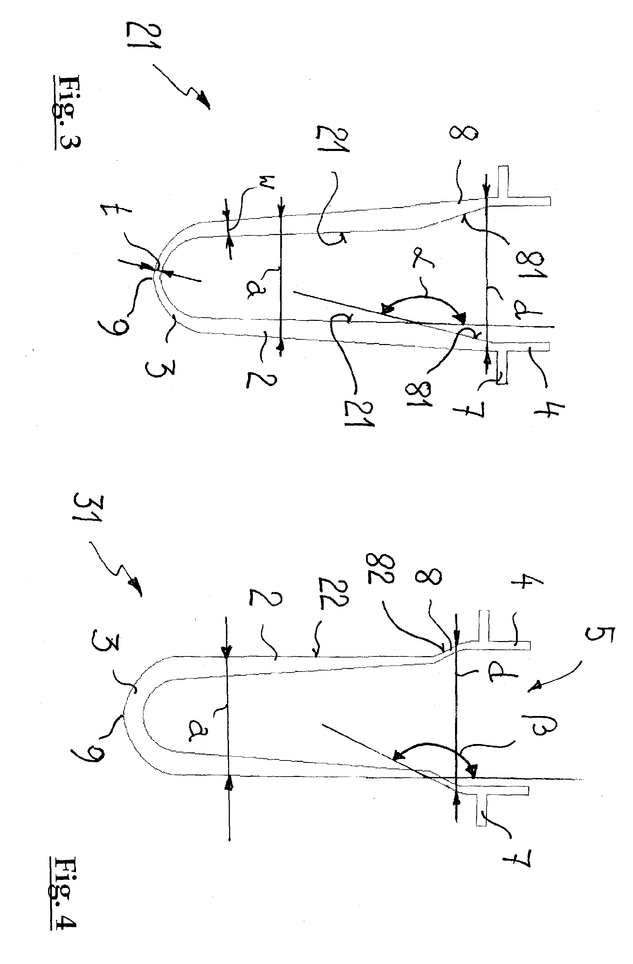

Eine in Fig. 3 dargestellte weitere Ausführungsvariante eines erfindungsgemässen Preforms trägt gesamthaft das Bezugszeichen 21. Gleiche Teile tragen wiederum gleiche Bezugszeichen wie in den vorangehenden Figuren. Der Körperabschnitt 2 des Preforms 21 weist wiederum eine Wandstärke w auf, die sich vom Preformanlauf 8 zum Endabschnitt 3 verringert. Die Wandstärke des Endabschnitts 3 trägt wiederum das Bezugszeichen t; der Anspritzpunkt ist mit 9 bezeichnet. Der Preformanlauf 8 weist einen Aussendurchmesser d auf, der sich über die Längserstreckung des Preformanlaufs 8 zum Körperabschnitt 2 hin verkleinert. Aus Fig. 3 ist ersichtlich, dass eine Innenwandung 81 des Preformanlaufs 8 in einem stumpfen Winkel α in die Innenwandung 21 des Körperabschnitts 2 des Preforms 1 einmündet. Der Einmündungswinkel α beträgt vorzugsweise 130° bis kleiner 180°. Durch diese Massnahme werden abrupte Übergänge weitgehend vermieden.

Der in Fig. 4 dargestellte und gesamthaft mit dem Bezugszeichen 31 versehene Preform ist beispielsweise zur Herstellung eines Weithalsgefässes ausgebildet. Der Halsabschnitt 4 weist eine Öffnung 5 auf, deren Öffnungsdurchmesser grösser ist als der Aussendurchmesser a des Körperabschnitts 2. Entsprechend weist auch der Preformanlauf einen Aussendurchmesser d auf, der sich vom deutlich grösseren Aussendurchmesser des Halsabschnitts 4 zum Körperabschnitt 2 hin verringert. Der Aussendurchmesser a des Körperabschnitts 2 des Preforms 1 nimmt zum Endabschnitt 3 hin nur mehr geringfügig ab. Trotz des relativ grossen Aussendurchmesserunterschieds des Preformanlaufs 8 unterhalb des Transportrings 7 und des an den Preformanlauf 8 angrenzenden Körperabschnitts 2 schliessen die Aussenwandung 82 des Preformanlaufs 8 und die Aussenwandung 22 des Körperabschnitts 2 am Übergang miteinander einen stumpfen Winkel β von vorzugsweise 130° bis kleiner 180° ein.

Den dargestellten Preforms ist gemeinsam, dass sich die Wandstärke w des Körperabschnitts 2 über seine Längserstreckung vom Übergang zum Preformanlauf 8 bis zum Übergang zum kuppenartigen Endabschnitt 3 im wesentlichen stetig um bis zu 2 mm verringert oder vergrössert. Der Innendurchmesser i und der Aussendurchmesser a des Körperabschnitts 2 verringern sich dabei vom Preformanlauf 8 bis zum kuppenartigen Endabschnitt 3 im Wesentlichen stetig um 0.1 - 3.5 mm.

Der erfindungsgemäss ausgebildete Preform weist keine abrupten, stufenartigen Wandstärkenänderungen auf. Dadurch können bei seiner Herstellung im Kunststoffspritzverfahren lokale thermische Belastungen vermieden, und Wandstärkenschwankungen über den Umfang verhindert werden. Die Ausbildung des Preforms erlaubt die gewünschte Materialverteilung am Preform, die für die erforderlichen Festigkeit und thermischen Beständigkeit der daraus streckgeblasenen Kunststoffflasche erforderlich ist, ohne dass dazu am Anspritzpunkt mehr Material bereitgestellt werden müsste. Die Erfindung ist bei allen für das Spritzblas- bzw. Spritzstreckblasverfahren geeigneten Kunststoffen anwendbar. Mit Vorteil besteht der Körperabschnitt des Preforms wenigstens zu 85% aus Materialien, die aus der Gruppe bestehend aus Polyestern (einschliesslich PET, PBT, PLA, und PEN), Copolyestern, Polyolefinen (insbesondere PP, HDPE) und Polystyrolen (GPS oder HIPS) gewählt sind.

Der erfindungsgemässe Preform ist für die Herstellung durch Spritzgiessen, Fliesspressen oder Spritzschäumen optimiert und dient als Zwischenprodukt für die Herstellung von Kunststoffflaschen oder Weithalsgefässen in einem Spritzblas- bzw. Spritzstreckblasverfahren.

## Patentansprüche

1. Preform zur Herstellung von Kunststoffflaschen oder Weithalsgefässen mit einem starren, im wesentlichen länglichen, kegelstumpfartigen Körperabschnitt (2), der an seinem einen Längsende durch einen kuppenartigen Endabschnitt (3) verschlossen ist und an seinem gegenüberliegenden Längsende über einen Preformanlauf (8) an einen mit einer Ausgiessöffnung (5) versehenen Halsabschnitt (4) angrenzt und einen Aussendurchmesser (a) aufweist, der sich vom Preformanlauf (8) zum Endabschnitt (3) verringert, **dadurch gekennzeichnet, dass** der Körperabschnitt (2) eine Wandstärke (w) aufweist, die sich über seine Längserstreckung im wesentlichen stetig um bis zu ± 2 mm verändert, und einen Innendurchmesser (i) besitzt, der von einem Übergang zum Preformanlauf (8) bis zu einem Übergang zum kuppenartigen Endabschnitt (3) im wesentlichen stetig abnimmt.

2. Preform gemäss Anspruch 1, **dadurch gekennzeichnet, dass** der Preformanlauf (8) einen Aussendurchmesser (d) aufweist, der sich vom Halsabschnitt (4) zum Körperabschnitt (2) verändert, während sein Innendurchmesser (e) vom Halsabschnitt (3) zum Körperabschnitt (2) im wesentlichen stetig abnimmt.

3. Preform nach Anspruch 2, **dadurch gekennzeichnet, dass** der Aussendurchmesser (d) des Preformanlaufs (8) sich vom Halsabschnitt (3) zum Körperabschnitt (2) wenigstens in einem Teilabschnitt vergrössert.

4. Preform nach Anspruch 2, **dadurch gekennzeichnet, dass** der Aussendurchmesser (d) des Preformanlaufs (8) sich vom Halsabschnitt (3) zum Körperabschnitt (2) wenigstens in einem Teilabschnitt verkleinert.

5. Preform nach einem der vorangehenden Ansprüche, **dadurch gekennzeichnet, dass** eine Innenwandung (81) bzw. eine Aussenwandung (82) des Preformanlaufs (8) mit einer angrenzenden Innenwandung (21) bzw. Aussenwandung (22) des Körperabschnitts (2) jeweils stumpfe Winkel (α bzw. β) einschliessen, die 130° bis kleiner 180°, vorzugsweise zwischen 158° und 178° und ganz besonders bevorzugt zwischen 160° und 175°betragen.

6. Preform nach einem der vorangehenden Ansprüche, **dadurch gekennzeichnet, dass** der Körperabschnitt (2) eine Mindestwandstärke aufweist, die 0.8 mm nicht unterschreitet.

7. Preform nach einem der vorangehenden Ansprüche, **dadurch gekennzeichnet, dass** der Körperabschnitt (2) eine Maximalwandstärke von 6 mm nicht überschreitet.

8. Preform nach einem der vorangehenden Ansprüche, **dadurch gekennzeichnet, dass** der Innendurchmesser (i) des Körperabschnitts (2) sich vom Preformanlauf (8) zum kuppenartigen Endabschnitt (3) um 0.1 mm - 3.5 mm, vorzugsweise verringert.

9. Preform nach einem der vorangehenden Ansprüche, **dadurch gekennzeichnet, dass** der Körperabschnitt (2) einen Aussendurchmesser (a) aufweist, der sich vom Preformanlauf (8) zum kuppenartigen Endabschnitt (3) um 0.1 - 3.5 mm verringert.

10. Preform nach einem der vorangehenden Ansprüche, **dadurch gekennzeichnet, dass** der kuppenartige Endabschnitt (3) eine Wandstärke (t) aufweist, die sich von der Wandstärke (w) des Körperabschnitts (2) bis zu einem Anspritzpunkt um 0% bis 50% verringert, wobei die Wandstärke im Anspritzpunkt unberücksichtigt bleibt.

11. Preform gemäss einem der vorangehenden Ansprüche, **dadurch gekennzeichnet, dass** der Körperabschnitt (2) des Preforms (1) wenigstens zu 85% aus Materialien gefertigt ist, die aus der Gruppe bestehend aus Polyestern (einschliesslich PET, PBT, PLA, und PEN), Copolyestern, Polyolefinen, insbesondere PP, HDPE, und Polystyrolen (GPS oder HIPS) gewählt sind.

12. Preform gemäss einem der vorangehenden Ansprüche und hergestellt durch Spritzgiessen, Fliesspressen oder Spritzschäumen.

13. Preform gemäss einem der vorangehenden Ansprüche, **dadurch gekennzeichnet, dass** der Preformanlauf durch einen Transportring vom Halsabschnitt getrennt ist.

14. Preform gemäss einem der vorangehenden Ansprüche, **dadurch gekennzeichnet, dass** die Wandstärke des Preformanlaufs über mindestens einen Teilbereich stetig zunimmt.

15. Kunststoffflasche hergestellt aus einem Preform gemäss einem der vorangehenden Ansprüche in einem Spritzblas- bzw. Spritzstreckblasverfahren.
